# EUROPEAN PATENT SPECIFICATION

(11) **EP 0 460 643 B1**
(45) Date of publication and mention of the grant of the patent: **17.04.1996**
(21) Application number: 91109197.3
(22) Date of filing: 05.06.1991
(51) Int. Cl.: H02H 7/00

(54) **Emergency circuit for, e.g., numerical control unit**
Sicherheitsschaltung für, zum Beispiel numerische Steuereinheit
Circuit de secours pour, par exemple, unité de commande numérique

(30) Priority: 06.06.1990 JP 146176/90
(43) Date of publication of application: 11.12.1991
(73) Proprietor: MITSUBISHI DENKI KABUSHIKI KAISHA, Tokyo 100 (JP)
(72) Inventor: Kazato, Hirohiko, c/o MITSUBISHI DENKI K. K., Higashi-ku, Nagoya-shi, Aichi (JP)
(74) Representative: Sajda, Wolf E., Dipl.-Phys.

(56) References cited:
- EP-A- 0 066 737
- EP-A- 0 336 973
- DE-C- 1 124 133

## Description

The invention relates to a fault detection or alarm system for use with units which are connected by a signal cable, comprising a first unit, the first unit including an oscillator for generating a clock signal and a signal transmission circuit for transmitting the clock signal to the signal cable; and at least one second unit including signal determination circuit means connected to the signal cable for detecting when the clock signal is not included in the signal received from the cable and generating a fault signal in response to the absence of the clock signal.

In particular, it is of interest in practice that such a fault detection or alarm system is capable of reliably performing a fault detection for emergency action such as the stoppage of a controlled device, despite loss of electrical communication or other problems. Also, it is of interest to use such a fault detection or alarm system in connection with a numerically controlled machine tool.

A fault detection or alarm system of the type specified above is known from the publication EP-A-0 066 737 where a two-wire circuit is provided comprising first and second lines which extend across detectors which may be provided as fire detectors. In the conventional arrangement, the detectors are provided as shunts with respect to the two-wire circuit. At the end of the two-wire circuit, a monitoring shunt circuit is provided by means of which information is supplied to a control centre by sending monitoring pulses as signals that the two-wire circuit is continuously in order.

In the conventional system, the detector is formed by detecting a shunt in which by means of a contact a resistor is shunted pulse-wise to the two-wire circuit. The control of the respective contact is carried out by means of a pulse generator which in turn is controlled by a sensor. In the case of a fire detecting system, the sensor starts the operation of the respective pulse generator if the sensor detects a fire. Then, the contact is actuated by pulses and thereby effects a pulse-wise increase of the closed-circuit current flowing through the two-wire circuit. Such a closed-circuit current is mainly determined by the current consumption of the sensor connected in a shunt of the two-wire circuit and additionally by the current consumption of the monitoring shunt circuit. This monitoring shunt circuit comprises a pulse generator which controls a contact which is connected to the two-wire circuit. As long as no interruption occurs in this two-wire circuit, the pulse generator of the monitoring shunt circuit is supplied with current and therefore permanently operates its contact in a pulsed manner.

In the conventional system, the respective pulse generator is of the type which is programmed to output an individual pulse code. In practice, the amplitude of the monitoring pulses supplied by the monitoring shunt circuit is considerably smaller than the amplitude of the pulse code supplied by the respective pulse generator associated with the respective sensor. Hence, the control centre can evaluate both the monitoring pulses and the pulse codes of the respective sensor. In the control centre, a first threshold trigger is provided which is adjusted that it switches through the detected value pulses received from the pulse generator of a sensor in the form of pulse codes, whereas it blocks the monitoring pulses generated by the pulse generator, using the signals of different amplitude. Also, a second threshold trigger is provided which has a considerably lower threshold value so that it switches through both the monitoring pulses and the detected value pulses.

In the conventional system, when a detector is put into operation, its corresponding pulse code appears on the two-wire circuit and is transmitted through a capacitor to the first threshold trigger. Due to the correspondingly adjusted threshold value, the first threshold trigger switches through the pulses of the pulse code which are then evaluated in an evaluating circuit connected thereto and are converted into the display of an address in a display unit.

To efficiently control a multi-axis machine tool, *etc.,* a numerical control unit includes a numerical operation section and a plurality of servo amplifiers provided for individual axes, which are connected by a signal cable. Signals transferred through this signal cable include command signals and emergency stop signals from the numerical operation section to the servo amplifiers, feedback signals from the servo amplifiers to the numerical operation section, and signals concerned with diagnostics and servo control adjustments.

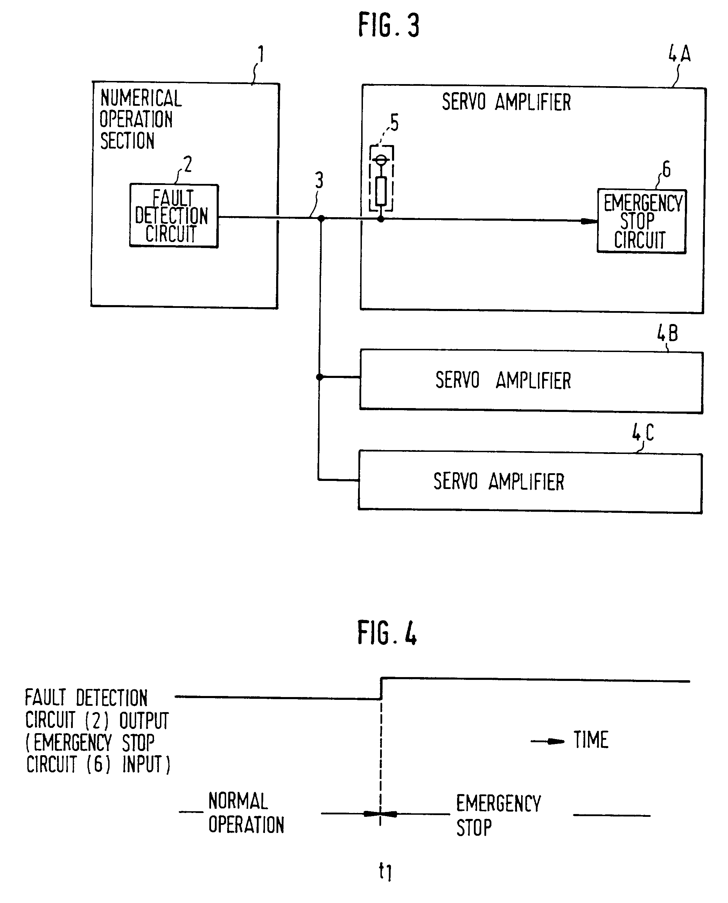

Fig. 3 is a block circuit diagram of a known emergency stop device for a numerical control unit and an associated machine tool,and Fig. 4 is a timing chart for the circuit diagram shown in Fig. 3.

Referring to Fig. 3, the numeral 1 indicates a numerical operation section. At 2 is a fault detection circuit provided in the numerical operation section 1. An emergency stop signal cable 3 is connected to the fault detection circuit 2, and servo amplifiers 4A to 4C are connected to the emergency stop signal cable 3. Pull-up resistors 5 are provided in the servo amplifiers 4A to 4C and connected to the emergency stop signal cable 3. Emergency stop circuits 6 are provided in each servo amplifier.

In the prior art emergency stop system, applied to a numerical control unit having the above configuration, the fault detection circuit 2 in the numerical operation section 1 detects an emergency stop input from outside the numerical control unit in addition to internal faults within the unit. The fault detection circuit 2 transmits a "low" signal to the emergency stop signal cable 3 when the operation is normal, and a "high" signal upon detection of any fault.

When the signal transmitted through the emergency stop signal cable 3 is "low",the emergency stop circuits 6 put the servo amplifiers 4A to 4C into a normal operation state as shown in Fig. 4. When that signal goes "high" at time tl, the emergency stop circuits 6 put the servo amplifiers 4A to 4C into an emergency stop state. That is, either the input of an external emergency stop command or the detection of any fault within the unit results in an emergency stop state.

Breakage of the emergency stop signal cable 3 itself is one of the failures which may occur. In such a case, the pull-up resistor 5 switches the input to the emergency stop circuit 6 to "high" to start the emergency stop state, thereby ensuring fail-safe operation.

The known circuit is designed to detect a signal transmitted from a fault detection circuit 2 through an emergency stop signal cable 3. Therefore, when the emergency stop signal is made "low" due to an accidental contact of the emergency stop signal cable 3 with a common or ground point or the like, or when there is a faulty circuit in any of the servo amplifiers 4A to 4C, the emergency stop state cannot be entered if an attempt is made to effect an emergency stop from the numerical operation section 1, and thus fail-safe operation cannot be achieved under such circumstances.

It is accordingly, an object of the present invention to overcome the disadvantages in the prior art by providing a circuit which allows an emergency stop function to operate on a fail-safe basis even if a fault occurs in the emergency stop signal cable or in any of the controlled units.

The object underlying the present invention is solved by a fault detection or alarm system as specified above which is characterized in that the signal transmission circuit is arranged for operating on the clock signal from the oscillator and an output signal from a fault detection circuit located in the first unit and for transmitting the clock signal to the signal cable when the fault detection circuit does not detect any fault and for inhibiting transmission of the clock signal to the signal cable when the fault detection circuit detects a fault.

According to a further development of the system according to the invention the signal determination circuit means include a first circuit for generating a signal in response to leading edges of the clock signal.

A specific embodiment of the system according to the invention includes a delay circuit coupled to an output of the first circuit and inverter means coupled to an output of the delay circuit.

In a further development of the system according to the invention the signal determination circuit means comprise a retriggerable stable multivibrator circuit.

A still further embodiment of the system according to the invention includes an emergency stop circuit for stopping the operation of the at least one second unit, coupled to an output of the signal determination circuit means.

According to a further aspect of the system according to the invention, the first unit comprises a control circuit for the at least one second unit.

In a further development of the system according to the invention, the first unit comprises a numerical control unit and the at least one second unit comprises at least one servo amplifier.

In a still further embodiment of the system according to the invention the signal transmission circuit is an OR circuit combining the clock signal and the output of the fault detection circuit.

The invention will be explained in more detail below with reference to the accompanying drawings, wherein
Fig. 1 is a block diagram of an embodiment of an emergency stop control circuit according to the present invention.
Fig. 2 is a timing chart for the circuit diagram shown in Fig. 1.
Fig. 3 is a block diagram of a prior art emergency stop circuit as applied to a numerical control unit, and
Fig. 4 is a timing chart for the circuit diagram illustrated in Fig. 3.

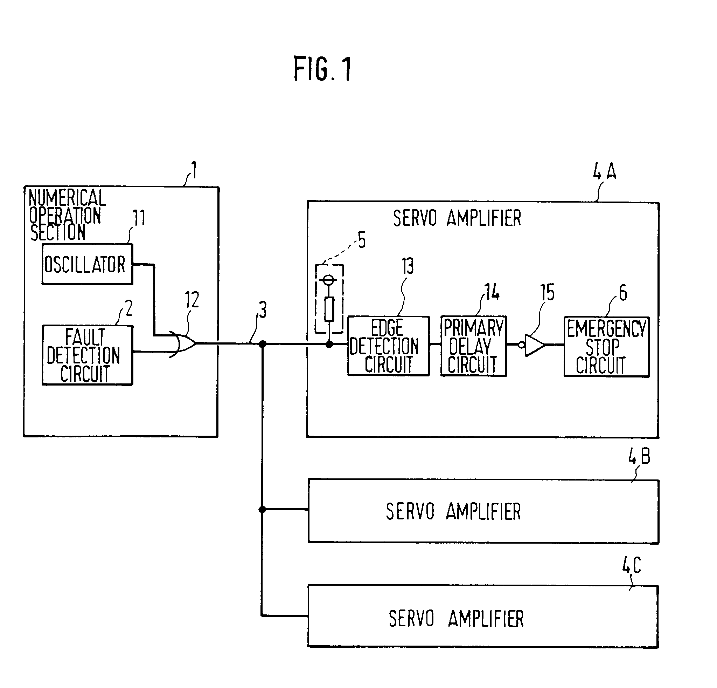

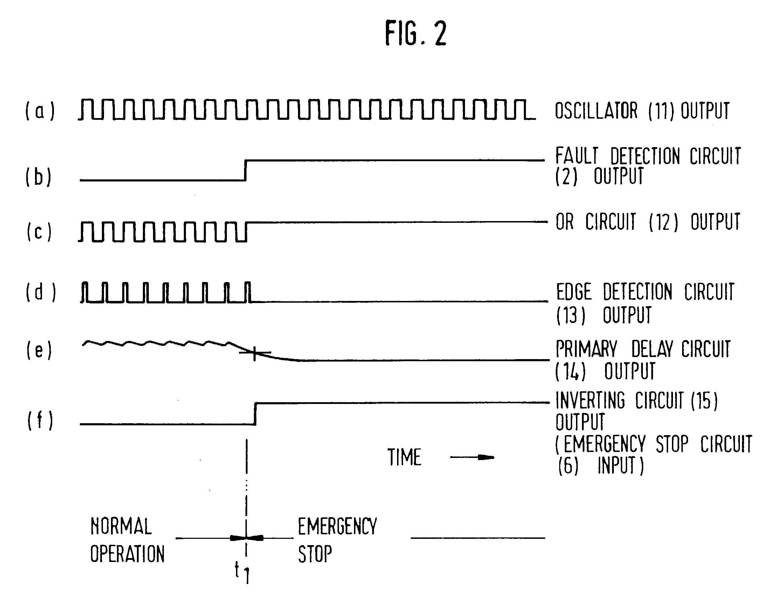

Fig. 1 is a block diagram of an embodiment of the present invention and Fig. 2 is a timing chart therefor, wherein parts similar to those in the prior art circuit are designated by the same reference characters.

In Fig. 1, the numeral 11 indicates an oscillator. An OR circuit 12 is connected to the oscillator 11 and to a fault detection circuit 2. These units 2, 11 and 12 constitute a signal detection circuit, the output side of which is connected to an emergency stop signal cable 3. An edge detection circuit 13 is connected to the emergency stop signal cable 3 for generating a pulse upon receipt of a leading edge of an input signal. A primary delay circuit 14 is connected to the edge detection circuit 13, and an inverting circuit 15 is connected to the primary delay circuit 14, the output side of which is connected to the emergency stop circuit 6. The edge detection circuit 13, the primary delay circuit 14 and the inverting circuit 15 constitute a signal determination circuit.

The operation of the present embodiment will now be described with reference to Fig. 2.

As shown in Fig. 2a, the oscillator 11 continuously outputs a clock signal at predetermined intervals, both during normal operation and in an emergency stop state.

During normal operation, since the output of the fault detection circuit 2 is "low" as shown in Fig. 2b, the output of the OR circuit 12 is a clock signal as shown in Fig. 2c. This signal is input to the edge detection circuit 13 through the emergency stop signal cable 3. The edge detection circuit 13 outputs a pulse as shown in Fig. 2d in accordance with the leading edge of the input signal. The primary delay circuit 14 outputs that pulse input with an appropriate time constant, and if there is a pulse input, keeps the output "high" (see Fig. 2e). This signal is inverted by the inverting circuit 15 and its output, i. e. the input of the emergency stop circuit 6, is set "low" as shown in Fig. 2f to cancel the emergency stop.

When a fault occurs at time tl, the output of the fault detection circuit 2 is switched "high" and the output of the OR circuit 12 also goes "high". This signal is entered into the edge detection circuit 13. However, since the input has no repetitive leading edge, the output of the edge detection circuit 13 goes "low". The output of the primary delay circuit 14 goes from "high" to "low", and the input of the emergency stop circuit 6 is set "high" at the input threshold level of the inverting circuit 15, effecting an emergency stop.

If any fault occurs in either of the emergency stop signal cable 3 or any of the servo amplifiers 4A to 4C and the emergency stop signal transmitted from the emergency stop signal-cable 3 is set either "high" or "low", the output of the edge detection circuit 13 is switched "low" because the input signal does not show a repetitive leading edge, and the input of the emergency stop circuit 6 is thus set "high", to cause an emergency stop as described above.

The OR circuit 12 employed as a signal detection circuit for synthesizing the emergency stop signal in the above embodiment may be replaced by a switch or a gate which has a similar function.

In addition, the edge detection circuit 13, the primary delay circuit 14 and the inverting circuit 15 used as a signal determination circuit for determining the presence or absence of the clock signal may be replaced by a retriggerable stable multivibrator or the like to provide a similar facility.

Further, the unbalanced connection type circuit for generating the emergency stop signal may be of a balanced type.

Furthermore, the present embodiment is applicable not only to the transmission of an electrical signal through the emergency stop signal cable 3 but also to the detection using an optical signal. In the case of optical circuits, the determination made depending on whether the clock signal is present or absent is extremely significant.

It will be apparent that the invention, as described above, achieves an emergency fault detection/alarm circuit which interprets a transmitted signal to be an emergency stop signal when the signal transmitted does not include a clock signal. Therefore, when maintained "high" or "low" due to a signal cable or controlled element fault, the signal is interpreted as an emergency stop signal, allowing the emergency stop function to operate on a fail-safe basis.

## Claims

1. A fault detection or alarm system for use with units (1, 4A, 4B, 4C) which are connected by a signal cable (3), comprising:
- a first unit (1), the first unit (1) including an oscillator (11) for generating a clock signal and a signal transmission circuit (12) for transmitting the clock signal to the signal cable (3); and
- at least one second unit (4A, 4B, 4C) including signal determination circuit means (13, 14, 15) connected to the signal cable (3) for detecting when the clock signal is not included in the signal received from the cable (3) and generating a fault signal in response to the absence of the clock signal,
characterized in that the signal transmission circuit (12) is arranged for operating on the clock signal from the oscillator (11) and an output signal from a fault detection circuit (2) located in the first unit (1) and for transmitting the clock signal to the signal cable (3) when the fault detection circuit (2) does not detect any fault and for inhibiting transmission of the clock signal to the signal cable (3) when the fault detection circuit (2) detects a fault.

2. The system according to claim 1,
wherein the signal determination circuit means (13, 14, 15) include a first circuit (13) for generating a signal in response to leading edges of the clock signal.

3. The system according to claim 2,
further including a delay circuit (14) coupled to an output of the first circuit (13) and inverter means (15) coupled to an output of the delay circuit (14).

4. The system according to any of claims 1 to 3,
wherein the signal determination circuit means (13, 14, 15) comprise a retriggerable stable multivibrator circuit.

5. The system according to any of claims 1 to 4,
further including an emergency stop circuit (6) for stopping the operation of the at least one second unit (4A, 4B, 4C), coupled to an output of the signal determination circuit means (13, 14, 15).

6. The system according to any of claims 1 to 5,
wherein the first unit (1) comprises a control unit (1) for the at least one second unit (4A, 4B, 4C).

7. The system according to any of claims 1 to 6,
wherein the first unit (1) comprises a numerical control unit and the at least one second unit (4A, 4B, 4C) comprises at least one servo amplifier (4A, 4B, 4C).

8. The system according to any of claims 1 to 7,
wherein the signal transmission circuit (12) is an OR circuit combining the clock signal and the output of the fault detection circuit (2).

## Patentansprüche

1. Störungsdetektier- oder -warnsystem zur Verwendung mit Einheiten (1, 4A, 4B, 4C), die durch ein Signalkabel (3) miteinander verbunden sind, wobei das System folgendes aufweist:
- eine erste Einheit (1), wobei die erste Einheit (1) einen Oszillator (11), um ein Taktsignal zu erzeugen, und eine Signalübertragungsschaltung (12) aufweist, um das Taktsignal zu dem Signalkabel (3) zu übertragen; und
- wenigstens eine zweite Einheit (4A, 4B, 4C), die eine Signalbestimmungs-Schaltungseinrichtung (13, 14, 15) aufweist, die mit dem Signalkabel (3) verbunden ist, um zu detektieren, ob das Taktsignal in dem von dem Kabel (3) empfangenen Signal enthalten ist, und um ein Störsignal aufgrund der Abwesenheit des Taktsignals zu erzeugen,
dadurch gekennzeichnet, daß die Signalübertragungsschaltung (12) dazu ausgebildet ist, eine Verarbeitung des Taktsignals von dem Oszillator (11) und eines Ausgangssignals einer Störungsdetektierschaltung (2), die in der ersten Einheit (1) angeordnet ist, vorzunehmen und das Taktsignal zu dem Signalkabel (3) zu übertragen, wenn die Störungsdetektierschaltung (2) keine Störung detektiert, und die Übertragung des Taktsignals zu dem Signalkabel (3) zu sperren, wenn die Störungsdetektierschaltung (2) einen Fehler detektiert.

2. System nach Anspruch 1,
wobei die Signalbestimmungs-Schaltungseinrichtung (13, 14, 15) eine erste Schaltung (13) aufweist, um ein Signal in Abhängigkeit von Vorderflanken des Taktsignals zu erzeugen.

3. System nach Anspruch 2,
das ferner eine Verzögerungsschaltung (14), die mit einem Ausgang der ersten Schaltung (13) gekoppelt ist, und eine Invertereinrichtung (15) aufweist, die mit einem Ausgang der Verzögerungsschaltung (14) gekoppelt ist.

4. System nach einem der Ansprüche 1 bis 3,
wobei die Signalbestimmungs-Schaltungseinrichtung (13, 14, 15) eine nachtriggerbare stabile Multivibratorschaltung aufweist.

5. System nach einem der Ansprüche 1 bis 4,
die ferner eine Not-Stopp-Schaltung (6) aufweist, um den Betrieb der wenigstens einen zweiten Einheit (4A, 4B, 4C), die mit einem Ausgang der Signalbestimmungs-Schaltungseinrichtung (13, 14, 15) gekoppelt ist, anzuhalten.

6. System nach einem der Ansprüche 1 bis 5,
wobei die erste Einheit (1) eine Steuereinheit (1) für die wenigstens eine zweite Einheit (4A, 4B, 4C) aufweist.

7. System nach einem der Ansprüche 1 bis 6,
wobei die erste Einheit (1) eine numerische Steuereinheit und die wenigstens eine zweite Einheit (4A, 4B, 4C) wenigstens einen Servoverstärker (4A, 4B, 4C) aufweist.

8. System nach einem der Ansprüche 1 bis 7,
wobei die Signalübertragungsschaltung (12) ein ODER-Glied ist, welches das Taktsignal und das Ausgangssignal der Störungsdetektierschaltung (2) verknüpft.

## Revendications

1. Système de détection d'erreurs ou système d'alarme, destiné à être utilisé avec des unités (1, 4A, 4B, 4C) qui sont raccordées par un câble à signaux (3), comprenant :
- une première unité (1), la première unité (1) comprenant un oscillateur (11) pour produire un signal d'horloge, et un circuit de transmission de signaux (12) pour transmettre le signal d'horloge vers le câble à signaux (3) ; et
- au moins une seconde unité (4A, 4B, 4C) comprenant un circuit de détermination de signaux (13, 14, 15) raccordé au câble à signaux (3) pour détecter lorsque le signal d'horloge n'est pas inclus dans les signaux reçus depuis le câble (3) et produire un signal de défaut en réponse à l'absence du signal d'horloge,
caractérisé en ce que le circuit de transmission de signaux (12) est agencé pour fonctionner sur le signal d'horloge provenant de l'oscillateur (11) et sur un signal de sortie provenant d'un circuit de détection de défauts (2) situé dans la première unité (1), et pour transmettre le signal d'horloge vers le câble à signaux (3) lorsque le circuit de détection de défauts (2) ne détecte aucun défaut, et pour inhiber la transmission du signal d'horloge vers le câble à signaux (3) lorsque le circuit de détection de défauts (2) détecte un défaut.

2. Système selon la revendication 1,
dans lequel le circuit de détermination de signaux (13, 14, 15) inclut un premier circuit (13) pour produire un signal en réponse aux flancs antérieurs du signal d'horloge.

3. Système selon la revendication 2,
comprenant en outre un circuit à retard (14) accouplé à une sortie du premier circuit (13), et des moyens d'inversion (15) accouplés à une sortie du circuit à retard (14).

4. Système selon l'une quelconque des revendications 1 à 3,
dans lequel le circuit de détermination de signaux (13, 14, 15) comprend un circuit multivibrateur stable et susceptible d'être re-déclenché.

5. Système selon l'une quelconque des revendications 1 à 4,
comprenant en outre un circuit d'arrêt d'urgence (6) pour arrêter le fonctionnement de ladite seconde unité (4A, 4B, 4C), accouplé à une sortie du circuit de détermination de signaux (13, 14, 15).

6. Système selon l'une quelconque des revendications 1 à 5,
dans lequel la première unité (1) comprend une unité de commande (1) pour ladite seconde unité (4A, 4B, 4C).

7. Système selon l'une quelconque des revendications 1 à 6,
dans lequel la première unité (1) comprend une unité de commande numérique, et la au moins une seconde unité (4A, 4B, 4C) comprend au moins un servo- amplificateur (4A, 4B, 4C).

8. Système selon l'une quelconque des revendications 1 à 7,
dans lequel le circuit de transmission de signaux (12) est un circuit du type OU qui combine le signal d'horloge et la sortie du circuit de détection de défauts (2).
